# EUROPEAN PATENT APPLICATION

(11) **EP 4 371 763 A1**
(43) Date of publication of application: **22.05.2024**
(21) Application number: 22306709.1
(22) Date of filing: 18.11.2022
(51) Int. Cl.: B32B 7/06, B32B 27/08, B32B 27/30, B32B 27/32, B32B 27/34, B32B 27/36, C08L 1/14, G01N 21/896

(54) **PEELABLE LINER FOR PROTECTING AN OPTICAL WAFER**

(71) Applicant: Essilor International, 94220 Charenton-Le-Pont (FR)
(72) Inventor: AMAYA GUTIERREZ, Mauricio, DALLAS, 75234 (US); TISNE, Severine, DALLAS, 75234 (US); GONZALEZ QUINONEZ, Carlos Omar, DALLAS, 75234 (US)
(74) Representative: Plasseraud IP

(57) **Abstract**

A peelable liner for protecting an optical wafer or a multilayer film from which the optical wafer can be cut, said liner comprising
a film A comprising one or more liner layers A each comprising a polymer A independently chosen from polymers having a melting point (Tₘ) of 115°C to 135°C, and
a film B comprising one or more liner layers B each comprising a polymer B independently chosen from polymers having a melting point of 150°C to 170°C,

said film A comprising a first face configured to be in direct contact with the optical wafer when the liner adheres to the optical wafer and a second face opposite the first face, and
said film B being placed on the second face of film A,
wherein the total thickness of the one or more liner layers A is of at least 5 µm and the total thickness of the one or more liner layers B is of at least 30 µm.

## Description

### Field

The present disclosure relates to an improved peelable liner for protecting an optical wafer. It also relates to an optical wafer protected by the improved peelable liner. It also relates to the use of the improved peelable liners for protecting an optical wafer allowing to avoid the formation of defects on the wafer during the forming of the wafer.

### Background

An optical wafer (hereinafter simply called "wafer") may be included in an ophthalmic lens for providing a function to the ophthalmic lens. A wafer is generally composed of a functional film or layer protected by one or two protective films or layers. The function provided by the wafer may be, for example: a light-absorbing function (e.g. for absorbing UV light, visible light, and/or IR light), a photochromic function, a polarizing function, or a color-enhancing function.

Wafers are thus films having optical and thermomechanical properties making them suitable for inclusion in ophthalmic lenses and comprising a functional film (or layer) providing the desired function or functions to the lens. In some cases, the wafer may be used directly as an ophthalmic lens.

A wafer may be included in an ophthalmic lens by inserting the wafer in a lens mold and injection-molding (in the case of a thermoplastic lens substrate) or casting (in the case of a thermosetting lens substrate) the lens substrate in the lens mold against the wafer. The wafer may thus be included on the front face of the lens substrate, on the back face of the lens substrate or embedded in the lens substrate.

A wafer may also be included in an ophthalmic lens by laminating the wafer on the lens substrate. In this case, an adhesive may be used for ensuring strong adhesion of the wafer on the lens substrate.

Generally, wafers are produced by cutting them to the desired dimensions from a film having the same structure of layers as the wafer. Moreover, it is necessary to form the wafer i.e. to give to the wafer the desired curvature before including the wafer in the ophthalmic lens. This step of forming the wafer is performed using formers that heat and press the wafer to give it the desired curvature.

When manufacturing an ophthalmic lens comprising a wafer, the wafer, or the film used to produce the wafer undergoes various process steps (e.g. cutting the wafer to the desired dimensions, forming the wafer to the desired curvature). During this process, it is important to protect the wafer, or the film used to produce the wafer, to avoid cosmetic defects in the final lens. For example, the wafer, or the film used to produce the wafer, needs to be protected from possible contamination or from scratches. For this purpose, the wafer, or the film used to produce the wafer, is covered with a peelable liner on one or both of its main faces. The liner is removed (by peeling) when needed in the final steps of the process (for example before the injection molding or casting step or before laminating the wafer on the lens substrate).

The use of a protective peelable liner is currently indispensable for the lenses obtained via a process involving the use of a wafer to be consumer acceptable.

However, in order to be acceptable for mass production, a liner must fulfill a number of requirements in addition to protecting efficiently the wafer, including:
- Be easy to cut without leaving residues at the edge,
- Not peel at the edge of the wafer in an unwanted manner when the protected wafer is handled,
- Not leave any molten residue in the former used to give the desired curvature to the wafer,
- Not stick on the operator gloves,
- Have excellent peelability which includes easy peeling initiation, no tearing of the liner while peeling, no residues left after peeling,

Moreover, the inventors behind the present disclosure have discovered that a wavy pattern observed on ophthalmic lenses obtained via a process involving the use of a wafer is caused by the use of inappropriate liners. Indeed, it has been discovered that such a wavy pattern is present initially on the liner (often when the liner comprises a layer of polypropylene) and is transferred to the wafer during the step of forming the wafer to the desired curvature (it is necessary to keep the liner on the wafer during this step to avoid other issues related to melting and contamination of the wafer and/or the formers). The wavy pattern thus transferred to the wafer is retained in the final ophthalmic lens.

### Summary

In order to solve these issues, the invention provides a peelable liner for protecting an optical wafer or a multilayer film from which the optical wafer can be cut, comprising
a film A comprising one or more liner layers A each comprising a polymer A independently chosen from polymers having a melting point (Tₘ) of 115°C to 135°C, and
a film B comprising one or more liner layers B each comprising a polymer B independently chosen from polymers having a melting point of 150°C to 170°C,

said film A comprising a first face configured to be in direct contact with the optical wafer when the liner adheres to the optical wafer and a second face opposite the first face, and
said film B being placed on the second face of film A,
wherein the total thickness of the one or more liner layers A is of at least 5 µm and the total thickness of the one or more liner layers B is of at least 30 µm.

### Detailed description

As herein defined, an ophthalmic lens is a lens which is designed to be used in monocles or in eyeglasses (including sunglasses, goggles and safety glasses). As defined herein, contact lenses are not ophthalmic lenses. Ophthalmic lenses are typically used to protect the eye and/or correct the sight. Ophthalmic lenses can be uncorrective ophthalmic lenses (also called piano or afocal lenses) or corrective ophthalmic lenses. A corrective lens may be a unifocal, a bifocal, a trifocal or a progressive lens. As defined herein, ophthalmic lenses can be finished lenses of semi-finished lenses. A semi-finished lens undergoes various treatment steps such as surfacing, coloring, coating and edging before being finally included in eyeglasses or in a monocle. A finished lens is ready to be included in eyeglasses or in a monocle.

As defined herein, a film is a stack of one or more layers.

A layer corresponds to a thickness of a given material between two interfaces. As defined herein, a stack of two or more layers is not a layer.

It is generally possible to observe the interface between two consecutive layers with a microscope.

Layers may be assembled by coextrusion or by pressing the layers one against the other. In some cases, inserting an adhesive layer between two layers before pressing them together helps assembling said two layers. In some cases, electrostatic forces between the layers are enough to assemble them with only minimal pressure. As defined herein, an adhesive layer counts as a layer.

As defined herein, a film or a layer that is "placed on" a face is defined as a film or layer that (a) is positioned over that face, (b) need not be in direct contact with that face, i.e. one or more intervening layers may be disposed between that face and the film or layer in question, and (c) need not cover that face completely. However, preferably, a film or layer that is "on" one face covers that face completely.

As defined herein an outer face of a film or a layer is a face of said film or layer on which no other layer is placed. As defined herein, a film or a layer has either zero, one or two outer faces.

The presently disclosed peelable liner for protecting an optical wafer or a multilayer film from which the optical wafer can be cut, comprises
a film A comprising one or more liner layers A each comprising a polymer A independently chosen from polymers having a melting point (Tₘ) of 115°C to 135°C, and
a film B comprising one or more liner layers B each comprising a polymer B independently chosen from polymers having a melting point of 150°C to 170°C,

said film A comprising a first face configured to be in direct contact with the optical wafer when the liner adheres to the optical wafer and a second face opposite the first face, and said film B being placed on the second face of film A,
wherein the total thickness of the one or more liner layers A is of at least 5 µm and the total thickness of the one or more liner layers B is of at least 30 µm.

In the present disclosure, the melting points of polymers may be measured by modulated differential scanning calorimetry according to the ISO 11357-3 standard using the following parameters:
- A first equilibration step at -90.00°C,
- Modulation applied of +/- 0.80°C every 60 seconds,
- First ramp at 5.00°C/min to 250.00°C,
- Second ramp at 10.00°C/min to -90.00°C,
- Third ramp at 5.00°C/min to 250.00°C.

It is believed that the liner layers B protect the liner layers placed underneath (including the liner layers A) from heat and improve the peelability of the liner. Without sufficient total thickness for the liner layers B, residues or defects in the form of dimples are left on a formed wafer after peeling the liner.

It is believed that the liner layers A provide good adhesion and peelability at the same time and provide a cushion that helps avoiding imprinting unwanted patterns (that may be present on liner layers B) on the wafer during forming. Moreover, liner layers A also diminish the amount of residue or defects left on a formed wafer after peeling the liner compared to other types of liner layers providing good adhesion.

The presently disclosed liner can be used with various types of wafers and strongly reduces the apparition of a wavy pattern when the wafer is formed compared to liners of the prior art. Moreover, it has generally excellent properties making it suitable for use in mass production.

In the herein disclosed liner, each liner layer A may be devoid of a polymer with a melting point lower than 115°C.

In the herein disclosed liner, each liner layer A may comprise at least 90 % by mass of the polymer A relative to the mass of the liner layer A.

In the herein disclosed liner, each liner layer A may comprise the polymer A as the only polymer present in said liner layers A. In this case non-polymeric additives may be present in the liner layers A.

In the herein disclosed liner, each liner layer B may comprise at least 90% by mass of the polymer B relative to the mass of the liner layer B.

In the herein disclosed liner, each liner layer B may comprise the polymer B as the only polymer present in said liner layers B. In this case non-polymeric additives may be present in the liner layers B.

In the herein disclosed liner, the polymer A may be a polyethylene.

In the herein disclosed liner, the polymer B may be a polypropylene.

In the herein disclosed liner, the first face of film A may provide static adhesion on the optical wafer or the liner may adhere to the optical wafer through an adhesive layer.

For example, the first face of the film A may be a face of an adhesive layer in direct contact with a liner layer A or may be a face of a liner layer A. In particular, the liner layer A to which the first face of the film A belongs or which is in direct contact with the adhesive layer to which the first face of the film A belongs may have a thickness comprised between 15 µm and 50 µm.

In the herein disclosed liner, the film A may only comprise the one or more liner layers A or may only comprise the one or more liner layers A and one or more adhesive layers.

In the herein disclosed liner, the film B may only comprise the one or more liner layers B or may only comprise the one or more liner layers B and one or more adhesive layers.

In the herein disclosed liner, the thickness of each layer A or B may be of 1 µm to 100 µm.

In the herein disclosed liner, the total thickness of the one or more liner layers A may be of 10 µm to 50 µm.

In the herein disclosed liner, the film A may have a thickness comprised between 10 µm and 50 µm. In the herein disclosed liner, the total thickness of the one or more liner layers B may be of 40 µm to 60 µm.

In the herein disclosed liner, the film B may have a thickness comprised between 40 µm and 60 µm.

In the herein disclosed liner, the film A may be in direct contact with the film B.

In the herein disclosed liner, a liner layer A may be coextruded with a liner layer B.

In the herein disclosed liner, the film B may comprise only two liner layers B separated by an adhesive layer. In particular, the film B may consist of only two liner layers B separated by an adhesive layer.

The present disclosure also relates to a multilayer film suitable for making an optical wafer comprising, placed on one another in the following order:
a first peelable liner according to any one of the preceding claims;
optionally, a front primer layer;
a front layer in direct contact with the front primer layer;
a functional layer;
a back layer;
optionally, a back primer layer in direct contact with the back layer;
optionally, a second peelable liner according to any one of the preceding claims

wherein an outer face of the first liner is an outer face of the multilayer film and wherein the first face of the film A of the first liner is in direct contact with
the front layer, or
when applicable the front primer layer,
and wherein, when applicable, an outer face of the second liner is an outer face of the multilayer film and wherein the first face of the film A of the first liner is in direct contact with
   the back layer, or
when applicable, the back primer layer.

In the herein disclosed multilayer film, the front and back layer may be viewed as the outermost layers of protective films protecting the functional layer or as protective layers protecting the functional layer.

A primer layer may be used to increase adhesion of the polymeric material of a lens on one or both of the protective films or layers of the wafer, when casting this polymeric material on the wafer. For example, KR993596 B1, WO2018/052454 and WO2019175354A1 describe a primer coating for improving adhesion between a triacetylcellulose (TAC) protective layer of a wafer and a cast CR-39 plastic lens in which the wafer is embedded. WO2021/170702 describes a primer coating for improving the adhesion of a polarizing wafer having a TAC protective film or layer which is positioned and cast on top (TAC-on-TOP) of a poly(thio)urethane lens, such as an ultra-high-index UHI Mitsui MR-7^{®} lens. In a TAC-on-TOP lens, there is only one adhesion interface between a TAC film or layer and the lens.

A primer composition may be applied to any one surface of the wafer or to both surfaces of the wafer.

The primer composition may be applied to the wafer by any method, including, but not limited to, spraying or roll coating. The primer composition may be air-dried or air oven dried and may be cured with UV irradiation or exposure to heat.

In the herein disclosed multilayer film, the front layer and the back layer may each comprise a thermoplastic polymer.

In the herein disclosed multilayer film, the thermoplastic polymer comprised in the front layer and the thermoplastic polymer comprised in the back layer may be independently selected from the list comprising a polycarbonate, a poly(methyl methacrylate), a polyethylene terephthalate, a cyclic olefin copolymer, a polyamide, and a cellulose acetate butyrate.

In the herein disclosed multilayer film, the front layer and the back layer may both comprise at least 90% by mass of the thermoplastic polymer relative to the mass of the front layer, respectively of the back layer.

In the herein disclosed multilayer film, the thermoplastic polymer comprised in the front layer and the thermoplastic polymer comprised in the back layer may both be a polycarbonate, a poly(methyl methacrylate), a polyethylene terephthalate, a cyclic olefin copolymer, a polyamide, or a cellulose acetate butyrate.

The herein disclosed multilayer film, may further comprise a layer of adhesive between the functional layer and the front layer, said layer of adhesive being in direct contact with the functional layer and the front layer.

The herein disclosed multilayer film, may further comprise a layer of adhesive between the functional layer and the back layer, said layer of adhesive being in direct contact with the functional layer and the back layer.

The present disclosure also relates to an optical wafer made of the multilayer film of the present disclosure.

An optical wafer may be made of the multilayer film of the present disclosure by cutting to the right dimensions from said film.

The present disclosure also relates to a use of a liner as disclosed herein for protecting an optical wafer when forming the optical wafer while avoiding or limiting the imprinting of a pattern on the optical wafer during the forming.

In the herein disclosed use, the optical wafer may be an optical wafer as disclosed herein.

### Examples

In the examples, liner 1, which is a liner according to the present disclosure, comprises, stacked directly on one another:
- a polyethylene layer having a melting point of 120°C and a thickness of 25 µm coextruded with a polypropylene layer having a melting point of 160°C and a thickness of 5 µm,
- a adhesive layer having a thickness of about 5 µm, and
- a polypropylene layer having a melting point of 160°C and a thickness of 40 µm.

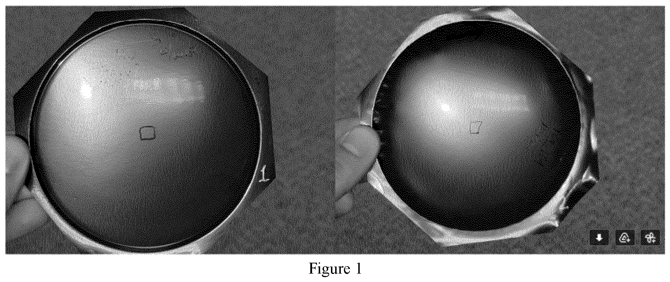

Figure 1 shows two commercial polarizing wafers with protective layers made of triacetylcellulose that have been formed. On the left, the original liner (i.e. the liner sold with the wafer), is made of polyethylene with a melting point of 114°C and a thickness of 60 µm. On the left liner 1 is used. The texture that can be seen on the left is absent on the right.

**Table 1**

| wafer function | liner | pattern observed | density of defects/presence of residue |
|---|---|---|---|
| polarizing | liner 1 | no pattern | low |
| polarizing | original liner | some wavy pattern | high |
| chroma enhancing | liner 1 | some wavy pattern | low |
| chroma enhancing | original liner | strong wavy pattern | high |

In table 1, the patterns observed when forming various types of wafers having protective layers made of polycarbonate are reported. The liner of the invention strongly reduces the apparition of the wavy pattern and the number of defects compared to the original liner. The original liner is made of a layer comprising a copolymer of ethylene and methacrylic acid having a melting point of 96°C and a thickness of 5.5 µm, which is coextruded with a polypropylene layer having a melting point of 161°C and a thickness of 45 µm.

## Claims

1. A peelable liner for protecting an optical wafer or a multilayer film from which the optical wafer can be cut, said liner comprising
a film A comprising one or more liner layers A each comprising a polymer A independently chosen from polymers having a melting point (Tₘ) of 115°C to 135°C, and
a film B comprising one or more liner layers B each comprising a polymer B independently chosen from polymers having a melting point of 150°C to 170°C,
said film A comprising a first face configured to be in direct contact with the optical wafer when the liner adheres to the optical wafer and a second face opposite the first face, and
said film B being placed on the second face of film A,
wherein the total thickness of the one or more liner layers A is of at least 5 µm and the total thickness of the one or more liner layers B is of at least 30 µm.

2. The liner according to claim 1, wherein each liner layer A comprises at least 90 % by mass of the polymer A relative to the mass of the liner layer A.

3. The liner according to claim 1 or 2, wherein each liner layer B comprises at least 90% by mass of the polymer B relative to the mass of the liner layer B.

4. The liner according to any one of the preceding claims, wherein the polymer A is a polyethylene.

5. The liner according to any one of the preceding claims, wherein the polymer B is a polypropylene.

6. The liner according to any one of the preceding claims, wherein the first face of the film A is a face of an adhesive layer in direct contact with a liner layer A or is a face of a liner layer A.

7. The liner according to any one of the preceding claims, wherein the total thickness of the one or more liner layers A is of 10 µm to 50 µm.

8. The liner according to any one of the preceding claims, wherein the total thickness of the one or more liner layers B is of 40 µm to 60 µm.

9. A multilayer film suitable for making an optical wafer comprising, placed on one another in the following order:
a first peelable liner according to any one of the preceding claims;
optionally, a front primer layer;
a front layer in direct contact with the front primer layer;
a functional layer;
a back layer;
optionally, a back primer layer in direct contact with the back layer;
optionally, a second peelable liner according to any one of the preceding claims
wherein an outer face of the first liner is an outer face of the multilayer film and wherein the first face of the film A of the first liner is in direct contact with
the front layer, or
when applicable the front primer layer,
and wherein, when applicable, an outer face of the second liner is an outer face of the multilayer film and wherein the first face of the film A of the first liner is in direct contact with the back layer, or
when applicable, the back primer layer.

10. The multilayer film according to claim 9, wherein the front layer and the back layer each comprise a thermoplastic polymer.

11. The multilayer film according to claim 10, wherein the thermoplastic polymer comprised in the front layer and the thermoplastic polymer comprised in the back layer are independently selected from the list comprising a polycarbonate, a poly(methyl methacrylate), a polyethylene terephthalate, a cyclic olefin copolymer, a polyamide, and a cellulose acetate butyrate.

12. The multilayer film according to claim 10 or 11, wherein the front layer and the back layer both comprise at least 90% by mass of the thermoplastic polymer relative to the mass of the front layer, respectively of the back layer.

13. The multilayer film according to any one of claims 10 to 12, wherein the thermoplastic polymer comprised in the front layer and the thermoplastic polymer comprised in the back layer are both a polycarbonate, a poly(methyl methacrylate), a polyethylene terephthalate, a cyclic olefin copolymer, a polyamide, or a cellulose acetate butyrate.

14. An optical wafer made of the multilayer film according to any one of claims 9 to 13.

15. Use of a liner according to any one of claims 1 to 8 for protecting an optical wafer when forming the optical wafer while avoiding or limiting the imprinting of a pattern on the optical wafer during the forming.
